# EUROPÄISCHE PATENTANMELDUNG

(11) **EP 1 672 331 A1**
(43) Veröffentlichungstag der Anmeldung: **21.06.2006**
(21) Anmeldenummer: 05025111.5
(22) Anmeldetag: 17.11.2005
(51) Int. Cl.: G01F 1/84

(54) **Coriolis-Massendurchflussmessgerät**

(30) Priorität: 14.12.2004 DE 102004060420
(71) Anmelder: Krohne AG, 4019 Basel (CH)
(72) Erfinder: Rolph, Chris, Northampton NN7 2HA Northants (GB); Harrison, Neil, Northampton NN5 6SR Northants (GB); Hussain, Yousif, Dr., Northampton NN3 3DA Northants (GB)
(74) Vertreter: Gesthuysen, von Rohr & Eggert

(57) **Zusammenfassung**

Die Erfindung betrifft ein Coriolis-Massendurchflußmeßgerät, mit einem Meßrohr (1) zum Führen eines strömenden Mediums, einem Schwingungserzeuger (2) zum Anregen von Umfangsschwingungen des Meßrohrs (1), einem Schwingungsaufnehmer (3) zum Erfassen von Umfangsschwingungen des Meßrohrs und zwei an dem Meßrohrs (1) befestigten Masseringen (5), wobei die Masseringe (5) umfangsmäßig um das Meßrohr herum verlaufen und der Schwingungserzeuger (2) und der Schwingungsaufnehmer (3) zwischen den beiden Masseringen vorgesehen sind. Erfindungsgemäß ist ein die beiden Masseringe (5) verbindender Zylinder vorgesehen. Damit wird ein Conolis-Massendurchihißmeßgerät erzielt, das eine hohe Nullpunktstabilität aufweist.

## Beschreibung

Die Erfindung betrifft ein Coriolis-Massendurchflußmeßgerät, mit einem Meßrohr zum Führen eines strömenden Mediums, einem Schwingungserzeuger zum Anregen von Umfangsschwingungen des Meßrohrs, einem Schwingungsaufnehmer zum Erfassen von Umfangsschwingungen des Meßrohrs und zwei an dem Meßrohr befestigten Masseringen, wobei die Masseringe umfangsmäßig um das Meßrohr herum verlaufen und der Schwingungserzeuger und der Schwingungsaufnehmer zwischen den beiden Masseringen vorgesehen sind.

Ein solches Coriolis-Massendurchflußmeßgerät ist z. B. aus der WO 95/16897 A2 bekannt. Bei dem dort beschriebenen Coriolis-Massendurchflußmeßgerät ist ebenfalls vorgesehen, Umfangsschwingungen des Meßrohrs anzuregen, also derartige Schwingungen, bei denen sich der Querschnitt des Meßrohrs wenigstens im Bereich der Schwingungsanregung aufgrund der Schwingung geometrisch ändert.

Ein Coriolis-Massendurchflußmeßgerät, bei dem eine ähnliche Schwingungsanregung von Umfangsschwingungen des Meßrohrs vorgesehen ist, ist in der WO 01/92833 A1 beschrieben. Das dort beschriebene Coriolis-Massendurchflußmeßgerät zeichnet sich insbesondere dadurch aus, daß das Meßrohr eine derartige Wandstärke aufweist, die wesentlich geringer ist als der Radius des Meßrohrs, so daß Umfangsschwingungen, die mit einer Deformation der Mantelflächen des Meßrohrs einhergehen, besonders einfach erzeugbar sind. Darüber hinaus ist bei diesem Coriolis-Massendurchflußmeßgerät vorgesehen, daß die Länge des Meßrohrs wenigstens in der gleichen Größenordnung wie der Radius des Meßrohrs liegt. Das in der WO 01/92833 A1 beschriebene Coriolis-Massendurchflußmeßgerät weist damit ein derartiges Meßrohr auf, das aufgrund seiner Kürze und seiner großen lichten Weite nur eine geringe Drosselung des Stroms des Mediums zur Folge hat und damit nur geringe Störwirkungen auf den Fluß im Rohrleitungssystem aufweist, in das das Coriolis-Massendurchflußmeßgerät eingebaut ist.

Bei dem in der WO 95/16897 A2 beschriebenen Coriolis-Massendurchflußmeßgerät ist ferner vorgesehen, in den Endbereichen des Meßrohrs jeweils einen Massering anzubringen. Diese umfangsmäßig um das Meßrohr herum verlaufenden Masseringe sollen zur Schwingungsisolierung dienen, also dazu, daß die angeregten Umfangsschwingungen nicht aus dem mittleren Bereich des Meßrohrs, in dem sich typischerweise der Schwingungserzeuger und der Schwingungsaufnehmer befinden, entkommen. Neben der erhöhten Masse durch die Masseringe ergibt sich am Ort ihrer Anbringung eine Erhöhung der Steifigkeit des Meßrohrs, was die gewünschte Schwingungsisolierung weiter verbessert. Insofern darf auch darauf hingewiesen werden, daß es sich bei den Masseringen nicht um zusätzlich an dem Meßrohr angebrachte Einrichtungen handeln muß, die Masseringe mit dem Meßrohr nämlich auch einstückig ausgebildet sein können.

Durch die zuvor beschriebene Verwendung von Masseringen kann die Meßgenauigkeit des Conolis-Massendurchilußmeßgeräts schon sehr gut sein. Es hat sich jedoch gezeigt, daß insbesondere die Nullpunktstabilität eines derart ausgestalteten Coriolis-Massendurchflußmeßgeräts noch nicht befriedigend ist.

Damit ist es die Aufgabe der Erfindung, ein derartiges Coriolis-Massendurchflußmeßgerät anzugeben, das eine hohe Nullpunktstabilität aufweist.

Ausgehend von dem eingangs beschriebenen Coriolis-Massendurchflußmeßgerät ist diese Aufgabe dadurch gelöst, daß ein die beiden Masseringe verbindender Zylinder vorgesehen ist.

Erfindungsgemäß weist das Meßrohr des Coriolis-Massendurchflußmeßgeräts also eine zusätzliche Einrichtung auf, nämlich einen Zylinder, der mit den beiden Masseringen verbunden ist. Vorzugsweise reicht der Zylinder dabei genau von dem einen zu dem anderen Massering.

Grundsätzlich könnte der Zylinder einstückig mit den Masseringen oder/und dem Meßrohr ausgebildet sein. Gemäß einer bevorzugten Weiterbildung der Erfindung ist jedoch vorgesehen, daß der Zylinder zumindest nicht einstückig mit dem Meßrohr ausgebildet ist. Eine einstückige Ausbildung von Masseringen und Zylinder ist jedoch ohne weiteres möglich.

Gemäß einer bevorzugten Weiterbildung der Erfindung ist ferner vorgesehen, daß der die beiden Masseringe verbindende und damit auch den Schwingungserzeuger sowie den Schwingungsaufnehmer einfassende Zylinder für den Schwingungserzeuger und für den Schwingungsaufnehmer als Widerlager dient. In diesem Zusammenhang sei angemerkt, daß auch eine Mehrzahl von Schwingungserzeugern oder/und Schwingungsaufnehmern vorgesehen sein kann, wobei der Zylinder dann auch für mehrere Schwingungserzeuger oder/und Schwingungsaufnehmer als Widerlager dienen kann.

Weiterhin ist gemäß einer bevorzugten Weiterbildung der Erfindung vorgesehen, daß das Coriolis-Massendurchflußmeßgerät mit einem Gehäuse versehen ist, das das Meßrohr und den Zylinder einschließt und an den beiden Endbereichen des Meßrohrs mit diesem verbunden ist. Dies zeigt, daß der Zylinder im wesentlichen keine Gehäusefunktion übernehmen soll, sondern im wesentlichen zu einer weiter verbesserten Schwingungsisolierung dient, was schließlich zu einer deutlich verbesserten Nullpunktstabilität führt.

Es hat sich gezeigt, daß es vorteilhaft ist, wenn die Breite der Masseringe und vorzugsweise auch die Wandstärke des Zylinders jeweils größer sind als die Wandstärke des Meßrohrs. Insofern ist es gemäß einer bevorzugten Weiterbildung der Erfindung vorgesehen, daß die Breite der Masseringe, vorzugsweise auch die Wandstärke des Zylinders, wenigstens um den Faktor 10, vorzugsweise wenigstens um den Faktor 20, größer ist als die Wandstärke des Meßrohrs. Dabei ist es ganz besonders bevorzugt, daß die Wandstärke des Zylinders im wesentlichen der Breite der Masseringe entspricht.

Wie zuvor schon ausgeführt, ist das vorliegend beschriebene Coriolis-Massendurchflußmeßgerät für einen derartigen Betrieb vorgesehen, bei dem Umfangsschwingungen des Meßrohrs erzeugt werden, also derartige Schwingungen, bei denen sich der Querschnitt des Meßrohrs während der Schwingungen geometrisch ändert. In diesem Zusammenhang ist es gemäß einer bevorzugten Weiterbildung der Erfindung ferner vorgesehen, daß das Meßrohr im Verhältnis zu seinem Radius eine hinreichend geringe Wandstärke aufweist, um mit dem Schwingungserzeuger anregbare und mit dem Schwingungsaufhehmer erfaßbare Umfangsschwingungen, einschließlich der damit verbundenen Coriolis-Schwingungen, des Meßrohrs zuzulassen. Dabei ist es besonders bevorzugt, daß die Wandstärke des Meßrohrs um den Faktor 50 geringer ist als der Radius des Meßrohrs.

Weiterhin ist es in diesem Zusammenhang bei einem Durchmesser des Meßrohrs von 100 mm besonders bevorzugt, daß die Wandstärke kleiner oder gleich 2 mm, vorzugsweise kleiner oder gleich 1 mm ist. Weiterhin ist es gemäß einer bevorzugten Weiterbildung der Erfindung vorgesehen, daß die Länge des Meßrohrs in der Größenordnung des Radius des Meßrohrs liegt, wodurch nur eine geringe Drosselstelle für das strömende Medium erzeugt wird. Entsprechendes ist insbesondere deshalb möglich, da keine Transversalschwingungen des Meßrohrs insgesamt, wie z. B. bei einer schwingenden Saite, sondern lediglich eine Umfangsschwingung des Meßrohrs, also eine Deformation der Mantelflächen des Meßrohrs erfolgt, was durch die geringe Wandstärke des Meßrohrs erleichtert wird. Dabei ist schließlich gemäß einer bevorzugten Weiterbildung der Erfindung vorgesehen, daß das Verhältnis von Länge des Meßrohrs zu Radius des Meßrohrs kleiner oder gleich 6, vorzugsweise kleiner oder gleich 4, ist

Schließlich sieht eine bevorzugte Weiterbildung der Erfindung vor, daß das Meßrohr an seinen beiden Enden jeweils eine Ankopplungseinrichtung zum Anschluß des Meßrohrs an ein Rohrleitungssystem aufweist, wobei die Ankopplungseinrichtungen derart ausgebildet sind, daß eine "weiche" Ankopplung des Meßrohrs an das Rohrleitungssystem gewährleistet wird. Insbesondere wird eine derartige "weiche" Ankopplung des Meßrohrs an das Rohrleitungssystem dadurch erzielt, daß als Ankopplungseinrichtungen Bälge vorgesehen werden. Der Übergang von Schwingungen aus dem Meßrohr des Coriolis-Massendurchflußmeßgeräts in das Rohrleitungssystem und damit mögliche in das Meßrohr zurückkoppelnde Störschwingungen werden damit weiter verringert.

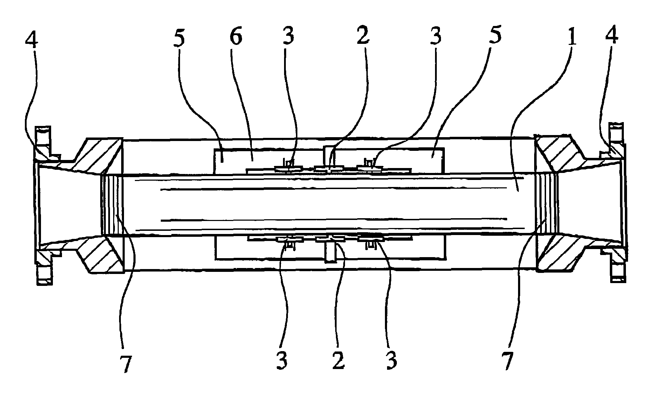

Im einzelnen gibt es nun eine Vielzahl von Möglichkeiten, das erfindungsgemäße Coriolis-Massendurchflußmeßgerät auszugestalten und weiterzubilden. Dazu wird auf die dem Patentanspruch 1 nachgeordneten Patentansprüche sowie auf die nachfolgende Beschreibung eines bevorzugten Ausführungsbeispiels der Erfindung unter Bezugnahme auf die Zeichnung verwiesen. In der Zeichnung zeigt die einzige Figur schematisch ein Coriolis-Massendurchflußmeßgerät gemäß einem bevorzugten Ausführungsbeispiel der Erfindung im Schnitt.

Das aus der Figur ersichtliche, schematisch im Schnitt dargestellte Coriolis-Massendurchflulimeßgerät gemäß dem bevorzugten Ausführungsbeispiel der Erfindung weist ein Meßrohr 1 auf, das im Betrieb des Coriolis-Massendurchflußmeßgeräts von einem nicht weiter dargestellten Medium durchströmt wird. Zur Schwingungsanregung des Meßrohrs 1 sind zwei Schwingungserzeuger 2 vorgesehen, nämlich einander genau gegenüberliegend, in Längsrichtung des Meßrohrs 1 gesehen genau in der Mitte des Meßrohrs 1.

In Längsrichtung des Meßrohrs 1 gesehen jeweils zu den beiden Schwingungserzeugern 2 versetzt sind zwei Paare von Schwingungsaufnehmern 3 vorgesehen. Zwei Schwingungsaufnehmer 3 eines jeweiligen Paars liegen einander ebenfalls gegenüber, wobei die beiden Paare mit jeweils zwei Schwingungsaufnehmern 3 in Längsrichtung des Meßrohrs 1 gesehen jeweils im gleichen Abstand von dem Paar mit den beiden Schwingungserzengern 2 vorgesehen sind. Insgesamt verlaufen auf einer jeweiligen Seite des Meßrohrs 1 der vorgesehene Schwingungserzeuger 2 und die Schwingungsaufnehmer 3 auf einer Linie, die parallel zur Längsachse des Meßrohrs 1 verläuft.

Weiterhin ist gemäß dem vorliegend beschriebenen bevorzugten Ausführungsbeispiel der Erfindung vorgesehen, daß die beiden einander gegenüberliegenden Schwingungserzeuger 2 die gleiche Masse aufweisen und auch alle vier Schwingungsaufnehmer 3 die gleiche Masse aufweisen, so daß insgesamt ein ausbalanciertes Meßrohr 1 erzielt wird. Außerdem sind die Schwingungserzeuger 2 und die Schwingungsaufnehmer 3 derart ausgebildet und angeordnet, daß ihre Schwerpunkte sehr nahe an der Wand des Meßrohrs 1 liegen. Auf diese Weise kommt die Massenträgheit der Schwingungserzeuger 2 und der Schwingungsaufnehmer 3 bei den Umfangsschwingungen des Meßrohrs 1 zu wenig zum Tragen, so daß diese durch die Schwingungserzeuger 2 und die Schwingungsaufnehmer 3 nur wenig beeinflußt werden.

Mit den Schwingungserzeugern 2 werden Umfangsschwingungen des Meßrohrs 1 erzeugt. Dazu ist ein Meßrohr 1 vorgesehen, das im Verhältnis zu seinem Radius eine hinreichend geringe Wandstärke aufweist, um mit den Schwingungserzeugern 2 anregbare und mit den Schwingungsaufnehmern 3 erfaßbare Umfangsschwingungen des Meßrohrs zuzulassen, wobei auch Coriolis-Schwingungen erfaßt werden können. Konkret ist dazu vorgesehen, daß die Wandstärke des Meßrohrs 1 wenigstens um den Faktor 50 geringer ist als der Radius des Meßrohrs, wobei die Wandstärke des Meßrohrs ca. 1 mm beträgt. Damit kann, wie der Figur entnehmbar, eine derartige, kurze Länge des Meßrohrs 1 erzielt werden, die in der gleichen Größenordnung liegt wie der Radius des Meßrohrs 1.

Wie bei herkömmlichen Coriolis-Massendurchflußmeßgeräten sind an den Enden des Meßrohrs 1 Flansche 4 vorgesehen, mittels derer der Einbau des Coriolis-Massendurchflußmeßgeräts gemäß dem vorliegend beschriebenen bevorzugten Ausführungsbeispiel der Erfindung in ein nicht weiter dargestelltes Rohrleitungssystem möglich ist. Außerdem weist das Meßrohr 1 an seinen beiden Enden jeweils einen Balg 7 zum Anschluß des Meßrohrs 1 an das Rohrleitungssystem auf. Dadurch wird eine "weiche" Ankopplung des Meßrohrs 1 an das Rohrleitungssystem gewährleistet wird. Der Übergang von Schwingungen aus dem Meßrohr 1 des Coriolis-Massendurchflußmeßgeräts in das Rohrleitungssystem und damit mögliche in das Meßrohr 1 zurückkoppelnde Störschwingungen werden damit weiter verringert. Schließlich ist, ähnlich wie bei herkömmlichen Coriolis-Massendurchflußmeßgeräten, noch ein das Meßrohr 1 und den Zylinder 6 einschließendes Gehäuse 7 vorgesehen, das an den beiden Endbereichen des Meßrohrs 1 mit diesem verbunden ist.

Wesentlich bei dem Coriolis-Massendurchflußmeßgerät gemäß dem vorliegend beschriebenen bevorzugten Ausführungsbeispiel der Erfindung ist nun, daß zwei Endmassen 5 vorgesehen sind, die im gleichen Abstand zur Mitte des Meßrohrs 2 derart an dem Meßrohr 1 befestigt sind, daß sie umfangsmä-βig um das Meßrohr 1 herum verlaufen und die Schwingungserzeuger 2 sowie die Schwingungsaufnehmer 3 einschließen. Einstückig mit diesen Masseringen 5 ist ein Zylinder 6 ausgebildet, der die beiden Masseringe 5 miteinander verbindet, genau von dem einen Massering 5 zu dem anderen Massering 5 reicht und dabei als Widerlager für die Schwingungserzeuger 2 und die Schwingungsaufnehmer 3 dienen. Dabei ist der Figur auch entnehmbar, daß die Breite der Masseringe 5 im wesentlichen der Wandstärke des Zylinders 6 entspricht, vorliegend nämlich bei ca. 1,5 cm liegt. Bei der gegebenen Wandstärke des Meßrohrs 1 von ca. 1 mm ist damit die Wandstärke des Zylinders und die Breite der Masseringe 5 um mehr als um den Faktor 50 größer als die Wandstärke des Meßrohrs 1. Insgesamt wird damit ein derartiges Coriolis-Massendurchflußmeßgerät erzielt, dessen Nullpunkistabilität sehr hoch ist.

## Patentansprüche

1. Coriolis-Massendurchflußmeßgerät, mit einem Meßrohr (1) zum Führen eines strömenden Mediums, einem Schwingungserzeuger (2) zum Anregen von Umfangsschwingungen des Meßrohrs (1), einem Schwingungsaufnehmer zum Erfassen von Umfangsschwingungen des Meßrohrs (1) und zwei an dem Meßrohr (1) befestigten Masseringen (5), wobei die Masseringe (6) umfangsmäßig um das Meßrohr (1) herum verlaufen und der Schwingungserzeuger (2) und der Schwingungsaufnehmer (3) zwischen den beiden Masseringen (5) vorgesehen sind, **dadurch gekennzeichnet; daß** ein die beiden Masseringe (5) verbindender Zylinder (6) vorgesehen ist.

2. Coriolis-Massendurchflußmeßgerät nach Anspruch 1, **dadurch gekennzeichnet, daß** der Zylinder (6) das Widerlager für den Schwingungserzeuger (2) und für den Schwingungsaufnehmer (3) bildet.

3. Coriolis-Massendurchflußmeßgerät nach Anspruch 1 oder 2, **dadurch gekennzeichnet, daß** ein das Meßrohr (1) und den Zylinder (6) einschließendes Gehäuse (7) vorgesehen ist, das an den beiden Endbereichen des Meßrohrs (1) mit diesem verbunden ist.

4. Coriolis-Massendurchflußmeßgerät nach einem der Ansprüche 1 bis 3, **dadurch gekennzeichnet, daß** die Breite der Masseringe (5), und vorzugsweise auch die Wandstärke des Zylinders (6), wenigstens um den Faktor 10, vorzugsweise wenigstens um den Faktor 20, größer ist als die Wandstärke des Meßrohrs (1).

5. Coriolis-Massendurchflußmeßgerät nach einem der Ansprüche 1 bis 4, **dadurch gekennzeichnet, daß** die Wandstärke des Zylinders (6) im wesentlichen der Breite der Masseringe (5) entspricht

6. Coriolis-Massendurchflußmeßgerät nach einem der Ansprüche 1 bis 5, **dadurch gekennzeichnet, daß** die Wandstärke des Meßrohrs (1) wenigstens um den Faktor 50 geringer ist als der Radius des Meßrohrs (1).

7. Coriolis-Massendurchflußmeßgerät nach einem der Ansprüche 1 bis 6, **dadurch gekennzeichnet, daß** die Wandstärke des Meßrohrs (1) kleiner oder gleich 2 mm, vorzugsweise kleiner oder gleich 1 mm, ist.

8. Coriolis-Massendurchflußmeßgerät nach einem der Ansprüche 1 bis 7, **dadurch gekennzeichnet, daß** die Länge des Meßrohrs (1) in der Größenordnung des Radius des Meßrohrs (1) liegt.

9. Corivlis-Massendurchflußmeßgerät nach Anspruch 8, **dadurch gekennzeichnet, daß** das Verhältnis von Länge des Meßrohrs (1) zu Radius des Meßrohrs (1) kleiner oder gleich 6, vorzugsweise kleiner oder gleich 4, ist.

10. Coriolis-Massendurchflußmeßgerät nach einem der Ansprüche 1 bis 9, **dadurch gekennzeichnet, daß** an den Enden des Meßrohrs (1) jeweils eine Ankopplungseinrichtung zur Ankopplung an ein Rohrleitungssystem vorgesehen ist, wobei die Ankopplungseinrichtungen eine weiche Ankopplung an das Rohrleitungssystem gewährleisten.

11. Coriolis-Massendurchflußmeßgerät nach Anspruch 10, **dadurch gekennzeichnet, daß** als Ankopplungseinrichtungen Bälge (7) vorgesehen sind.
